# EUROPEAN PATENT APPLICATION

(11) **EP 2 884 565 A1**
(43) Date of publication of application: **17.06.2015**
(21) Application number: 13196360.5
(22) Date of filing: 10.12.2013
(51) Int. Cl.: H01M 4/04, H01M 4/525, H01M 4/58, H01M 10/052, H01M 4/62

(54) **Lithium-intercalating electrode material**

(71) Applicant: ETH Zurich, 8092 Zürich (CH); Paul Scherrer Institut, 5232 Villigen (CH)
(72) Inventor: Nesper, Reinhard, 8873 Amden (CH); Villevielle, Claire, 5303 Würenlingen (CH); Novak, Petr, 5200 Brugg (CH); Wang, Xiao-Jun, 9000 St. Gallen (CH)
(74) Representative: Schmitz, Joseph

(57) **Abstract**

Lithium-intercalating electrode material, preferably for use in a secondary lithium-ion cell, in the form of a core-shell particle, wherein the core of the core-shell particle comprises, preferably consists of, an oxide of a transition metal, and b. the shell of said core-shell particle comprises, preferably consists of, a sulphide of said transition metal.

## Description

### TECHNICAL FIELD

The present invention relates to lithium-intercalating electrode materials for use in a secondary lithium-ion cell.

### PRIOR ART

Secondary lithium-ion cells, or batteries, are a type of rechargeable batteries in which lithium ions move from the anode to the cathode during discharge and back when charging. Compared to the metallic lithium (Li⁰) used in primary lithium-ion cells, secondary (i.e. rechargeable) lithium-ion cells use an intercalating lithium-based material as the electrode material.

Secondary lithium-ion cells are common in computers, communication devices and consumer electronics (3C), and are one of the most popular types of rechargeable battery for portable electronic devices because of their exceptionally high energy densities, the absence of memory effect, and slow loss of charge when not in use.

For the last 30 years, transition metal sulphides (TMS) have been considered to be important electrode materials in secondary Li-ion cells and the mechanisms inherent to their successful use in secondary electrochemical cells have been elucidated: Transition metal sulphides are able to store lithium by intercalation/de-intercalation of lithium in their lattices. However, when used as an electrode material in a secondary electrochemical, a disadvantage of transition metal sulphides is that after several charge/discharge cycles, their capacity fades due to the formation of polysulfides, which is why the industry has sought to cure this disadvantage through the use of alternative materials such as transition metal oxides (TMO), especially conversion-type TMOs, since TMOs have about the same capacity than TMSs.

While transition metal oxides (TMO) do not suffer from the formation of polysulfides during cycling, they suffer from another disadvantage, which is the excessively higher voltage with respect to the transition metal sulphides (TMS).

With respect to electrode materials based on molybdenum compounds, molybdenum (IV) oxide has been intensively investigated as a possible anode material in the past, while molybdenum trioxide MoO₃ has been considerably less investigated. However, in recent history, the material has been investigated as a cathodic material in "Electrochemical activity of a-Mo03 nano-belts as lithium-ion battery cathode"; Uttam Kumar Sen, Sagar Mitra; RSC Advances, 2012,2,11123-11131, and "Lithiated MoO3 Nanobelts with Greatly Improved Performance for Lithium Batteries"; Adv. Mater., 19: 3712-3716; Mai, L. Q., Hu, B., Chen, W., Qi, Y. Y., Lao, C. S., Yang, R. S., Dai, Y. and Wang, Z. L.

Molybdenum trioxide can theoretically intercalate more lithium, and the applicants have previously reported the synthesis of stable molybdenum trioxide nanobelts having an improved lithium ion mobility when compared to regular MoO₃, see "Ammonolyzed MoO3 Nanobelts as Novel Cathode Material of Rechargeable Li-Ion Batteries"; Adv. Energy Mater., 3: 606-614; Wang, X.-J., Nesper, R., Villevieille, C. and Novák, P.

Other publications that investigated the properties of molybdenum trioxide are "Deintercalation of LixCo0.8Mn0.2O2: A magnetic approach"; Journal of Power Sources, Volume 196, Issue 15, 1 August 2011, Pages 6440-6448*;* H.A.M. Abuzeid, A.M.A. Hashem, A.E. Abdel-Ghany, A.E. Eid, A. Mauger, H. Groult, C.M. Julien and "Electrochemical activation of Li2MnO3 at elevated temperature investigated by in situ Raman microscopy"; Electrochimica Acta, Volume 109, 30 October 2013, Pages 426-432*;* Patrick Lanz, Claire Villevieille, Petr Novák

Since neither transition metal sulphides nor transition metal oxides alone may be satisfactorily used as electrode material without disadvantages, it is therefore an object of the present invention to provide for a lithium-intercalating electrode material for use in a secondary lithium-ion cell which can rival the desirable properties of TMSs and TMOs, i.e. exhibits a large capacity, high cycling ability and low fading, and suffers to a lesser extent or not at all from the disadvantages associated therewith.

US4245017 relates to a method of preparing cathodes for use in secondary cells, which cathodes may be obtained by the reacting of a transition metal chalcogenide, in particular MoS₂, at a temperature 575 to 590°C with oxygen in a tube furnance. In the described method, a coat of MoO₂ is formed on the MoS₂ cathode, which exhibits excellent reversibility and discharge rate capabilities. While the formation of other Mo oxides was hypothesized, the formation thereof could not be proven through X-ray analysis.

EP0936687 describes a powder material that electrochemically intercalates and deintercalates lithium ions. The powder material comprises a compound containing an oxygen element, a sulfur element and at least one transition metal element such as Mo. The powder material can be prepared by mixing a transition metal oxide (a) and a sulfur compound (b) capable of forming hydrogen sulfide or sulfur in a vessel and heating the mixture in the vessel under pressure (sintering) at temperatures of from 100 to 800°C.

### SUMMARY OF THE INVENTION

In the context of the present invention, the term "cell" refers to an assembly comprising an anode, cathode and electrolyte, and which assembly is capable of converting stored chemical energy into electrical energy.

In the context of the present invention, the term "secondary lithium-ion cell" refers to a rechargeable cell in which either the cathode or the anode comprise a lithium-based electrode material, and in some cases both.

In the context of the present invention, the term "core-shell particle" refers to a particle comprising an inner core and an outer shell, which shell forms a layer on top of and in contact with the core of the particle and which shell at least partially covers said core of the particle.

In the context of the present invention, the term "transition metal oxide" and "oxide of a transition metal" are used interchangeably.

In the context of the present invention, the term "particle" refers to a particulate solid without being limited to particular shape or size.

The present invention provides for a lithium-intercalating electrode material, preferably for use in a secondary lithium-ion cell, in the form of a core-shell particle, wherein the core of the core-shell particle comprises, preferably consists of, an oxide of a transition metal, and b. the shell of said core-shell particle comprises, preferably consists of, a sulphide of said transition metal.

According to the present invention, the lithium-intercalating electrode material is in the form of a core-shell particle.

In the core-shell particle of the lithium-intercalating electrode material of the present invention, the shell of the core-shell particle may either partially cover the core of the core-shell particle or entirely cover the core of the core-shell particle, and preferably covers the core of the core-shell particle entirely.

The core-shell particle of the lithium-intercalating electrode material of the present invention may have any suitable shape such as for example an elongated shape like a needle-shape, belt-shape, whisker-shape, rod-shape, filament-shape; or a flat shape like platelet-shaped, cup-shaped; or may have an essentially spherical shape; or may have more complicated shapes such as star-shape. The core-shell particle of the lithium-intercalating electrode material of the present invention is preferably of an elongated shape and most preferably the core-shell particle has an elongated shape such as belt-shape.

In the case where the core-shell particle has an elongated shape, the core-shell particle may have a width of 10 to 300 nm and preferably of 30 to 300 nm, a thickness of 5 to 30 nm and preferably of 10 to 30 nm, and a length of from 100 nm to 10 µm and preferably of 500 nm to 5 µm, which particles are also known as "nanobelts".

In the core-shell particle of the lithium-intercalating electrode material of the present invention, the core of the core-shell particle comprises, or consists of, an oxide of a transition metal.

Suitable oxides of a transition metal may be chosen among oxides of Sc, Y, Ti, Zr, Hf, V, Nb, Ta, Cr, Mo, W, Mn, Tc, Re, Fe, Ru, Os, Cu, Co, Rh, Ir, Ni, Pb, Pt, Au,Ag,Zn, lanthanoids and actinoids. Preferably, suitable oxides of a transition metal may be chosen among oxides of molybdenum, chromium, manganese, iron, silver and nickel. More preferably, the oxide of a transition metal is an oxide of molybdenum.

In the case where the oxide of a transition metal is an oxide of molybdenum, the oxide of molybdenum is preferably chosen from molybdenum trioxide, molybdenum (IV) oxide or mixtures thereof, and most preferably is molybdenum trioxide.

Molybdenum trioxide is commercially available, or can directly be obtained by roasting molybdenum disulfide (MoS₂) in the presence of oxygen or by acid precipitation from of an aqueous solution of sodium molybdate with a suitable acid such as for example perchloric acid. In particular, molybdenum trioxide nanobelts may be obtained by reacting metal molybdenum with hydrogen peroxide in aqueous solution as described in "Ammonolyzed MoO3 Nanobelts as Novel Cathode Material of Rechargeable Li-Ion Batteries"; Adv. Energy Mater., 3: 606-614; Wang, X.-J., Nesper, R., Villevieille, C. and Novák, P.

The core of the core-shell particle may further comprise a mixture of two or more oxides of a transition metal, or may further comprise one or more oxides of a transition metal mixed with an earth alkali or an alkali metal, or mixtures thereof. Exemplary earth alkali or alkali metals are Ca, Li or Na.

In the core-shell particle of the lithium-intercalating electrode material of the present invention, the shell of the core-shell particle comprises, or consists of, a sulphide of the transition metal of the oxide of the transition metal comprised in the core of the core-shell particle.

In the case where the oxide of a transition metal comprised in the core of the core-shell particle is molybdenum trioxide or molybdenum (IV) oxide, the transition metal sulphide comprised in the shell of the core-shell particle is molybdenum disulphide.

In the core-shell particle of the lithium-intercalating electrode material of the present invention, the shell of the core-shell particle may have a thickness of from 0.1 nm to 20 nm, more preferably of from 1 to 10 nm.

In the core-shell particle of the lithium-intercalating electrode material of the present invention, the molar ratio between the sulphide of the transition metal (TMS) comprised in the shell and the oxide of the transition metal (TMO) comprised the core is of from 1:99 to 50:50, preferably of from 5:95 and 25:75, more preferably of from 10:90 to 15:85.

In a preferred embodiment of the present invention, the core of the core-shell particle comprises, preferably consists of, molybdenum trioxide and the shell of said core-shell particle comprises, preferably consists of, a molybdenum disulphide, and the molar ratio between molybdenum disulphide comprised in the shell and the molybdenum trioxide comprised in the core is of from 1:99 to 50:50, preferably of from 5:95 and 25:75, more preferably of from 10:95 to 15:85.

The present invention further provides for a secondary lithium-ion cell comprising an electrode, a counter-electrode and an electrolyte. The electrode comprises the lithium-intercalating electrode material described above.

The electrode may further comprise electrically on o more conductive fillers and one or more binders.

A person skilled in the art will know which electrically conductive filler may be suitably used in an electrode. Exemplary electrically conductive fillers are carbon-derived fillers, especially carbon or acetylene blacks with a high to very high void volume capable of absorbing high amounts of electrolyte.

A person skilled in the art will know which binders may be suitably used in an electrode, and that such binders may be chosen from polymeric binders. Exemplary polymeric binders are styrene butadiene rubber based binders and fluorinated polymers such as for

### example PVDF.

A person skilled in the art will know which suitable electrolytes may be used in a given secondary lithium-ion cell. Exemplary electrolytes may are mixtures of alkyl carbonates such as propylene carbonate, dimethyl carbonate or ethyl carbonate with lithium derivatives such as LiBF₄, LiClO₄ or LiPF₆.

The electrode comprised in the secondary lithium-ion cell of the present invention may comprise a lithium-intercalating electrode material as described above, an electrically conductive filler and a binder, and may be obtained by mixing the lithium-intercalating electrode material, the electrically conductive filler, the binder and forming a paste through the addition of a suitable solvent, for example N-methyl-2-pyrrolidone, which paste may be then applied to a collector substrate such as for example a metal foil.

The present invention further provides for a method of producing a lithium-intercalating electrode material in the form of a core-shell particle, comprising the steps of a. bringing a predetermined quantity of particles comprising, or consisting of, an oxide of a transition metal to a temperature of from 200 to 500 °C, b. contacting said particles with a predetermined amount of sulphur in the gaseous state at a temperature of from 200 to 500°C for a predetermined time such as to form a shell of sulphide of the transition metal on said particles. The core-shell particles according to the present invention can be obtained by contacting the transition metal oxide particles with a predetermined amount of sulphur in the gaseous state at a temperature of from 200 to 500°C for about 5 to 30 minutes, preferably for about 10 to 20 minutes.

The method for producing a lithium-intercalating electrode material according to the present invention may be carried out in an oxygen-free gas atmosphere or in an inert gas atmosphere, and is preferably carried out in an inert gas atmosphere, more preferably in an N₂, Ar or Xe atmosphere optionally containing between 0.01 and 5 volume percent hydrogen.

The method for producing a lithium-intercalating electrode material according to the present invention may be carried out in a furnace, preferably a gas flow furnace.

A gas flow furnace comprises a temperature-controlled cavity such as for example a tubular cavity through which a flow of heated gas, can be directed. The reactants are usually placed in-line with the gas flow, such that the reactant which is up-stream of the gas flow changes into the gaseous state and is carried towards the reactant which is downstream of the gas flow. In a preferred embodiment of the method according to the present invention, a gas flow furnace is used, and the sulphur is placed upstream of the gas flow whereas the particles comprising, or consisting of, oxide of a transition metal are placed downstream of the gas flow. As the gas and the furnace cavity are heated to temperature above the boiling temperature of sulphur, the sulphur changes into the gaseous state and is carried by the gas flow onto the particles where it contacts the particles and reacts with the oxide of the transition metal to form a coat, or shell, of the corresponding transition metal sulphide.

In step a., the particles comprising, or consisting of, a transition metal oxide may be in any suitable shape such as for example an elongated shape like a needle-shape, belt-shape, whisker-shape, rod-shape, filament-shape; or a flat shape like platelet-shaped, cup-shaped; or may have an essentially spherical shape; or may have more complicated shapes such as star-shape. Preferably the particles have an elongated shape and most preferably the core-shell particle has an elongated shape such as belt-shape. Most preferably, the particles are molybdenum trioxide nanobelts such as for example molybdenum trioxide nanobelts manufactured according to the procedure described in "Ammonolyzed MoO3 Nanobelts as Novel Cathode Material of Rechargeable Li-Ion Batteries"; Adv. Energy Mater., 3: 606-614; Wang, X.-J., Nesper, R., Villevieille, C. and Novák, P..

Alternatively, the oxide of a transition metal particles may be formed by any suitable process, such as for example grinding a coarser material comprising, or consisting of, a transition metal oxide into finer particles, or by precipitation of transition metal oxide particles from a solution of transition metal oxide. Further suitable methods are described in the scientific publications mentioned in the background section.

In the method for producing a lithium-intercalating electrode material according to the present invention, the weight ratio between the predetermined amount of particles comprising, or consisting of, an oxide of a transition metal of step a. and the predetermined quantity of sulphur of step b. may be of from 1:10 to 10:1 and preferably from 3:10 to 3:2 (MoO₃:S).

Additionally, the present invention provides for a lithium-intercalating electrode material for use in a secondary lithium-ion cell in the form of a core-shell particle, obtainable through the above method.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

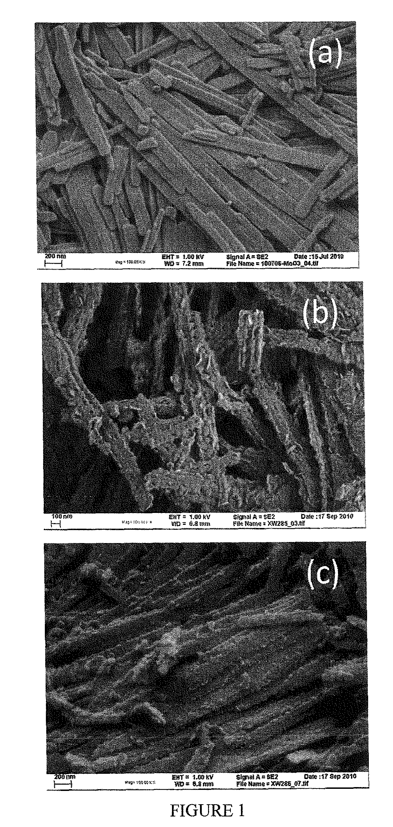

- Fig. 1: shows (a) SEM image of pure and untreated MoO₃ nanobelts, (b) SEM image of MoO₃/MoS₂ nanobelts obtained by reacting 0.3 g of MoO₃ nanobelts with 0.5 g sulphur at 400°C for 10 minutes, (c) SEM image of MoO₃/MoS₂ nanobelts obtained by reacting 0.3 g of MoO₃ nanobelts with 0.2 g sulphur at 400°C for 10 minutes.

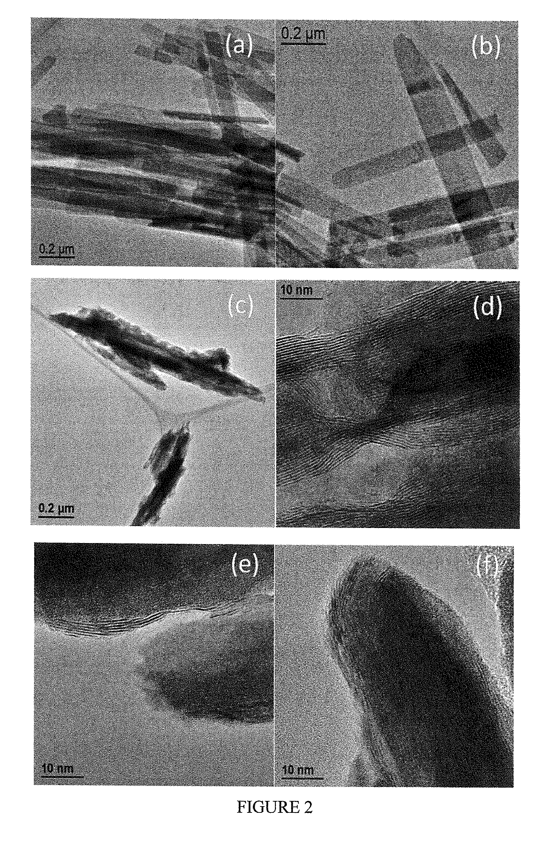

- Fig. 2: shows (a) TEM images of pure and untreated MoO₃ nanobelts, (b) TEM images of pure and untreated MoO3 nanobelts, (c) TEM image of MoO₃/MoS₂ nanobelts obtained by reacting 0.3 g of MoO₃ nanobelts with 0.5 g sulphur at 400°C for 10 minutes, (d) TEM image of MoO₃/MoS₂ nanobelts obtained by reacting 0.3 g of MoO₃ nanobelts with 0.5 g sulphur at 400°C for 10 minutes, where the visible layer-like surface structures having about 10 nm thickness are MoS₂, (e) TEM image of MoO₃/MoS₂ nanobelts obtained by reacting 0.3 g of MoO₃ nanobelts with 0.2 g sulphur at 400°C for 10 minutes, where the visible layer-like surface structures are MoS₂, (f) TEM image of MoO₃/MoS₂ nanobelts obtained by reacting 0.3 g of MoO₃ nanobelts with 0.2 g sulphur at 400°C for 10 minutes, where the visible layer-like surface structures having about 5 or 7 nm thickness are MoS₂.
- Fig. 3: shows (a) synchrotron XRD diffraction pattern of MoO₃/MoS₂ nanobelts obtained according to example 5, obtained by reacting 0.5 g of MoO3 nanobelts with 0.333 g sulphur at 400°C for 15 minutes.
- Fig. 4: shows a tube furnace (4a) setup for the synthesis of the core-shell particles according to the invention. A recipient (4b) holding a quantity of sulphur (4c) is placed in the furnace tube (4d) upstream of a recipient (4e) holding a quantity of oxide of a transition metal (4f). The downstream end of the furnace tube is equipped with a sulphur filter (4g).
- Fig. 5: shows (left) specific charge at 1C and C/10 between 0.05V-3.5V vs. Li+/Li for the MoO₃/MoS₂ for a test cell including the core-shell particles according to example 5, obtained by reacting 0.5 g of MoO₃ nanobelts with 0.333 g sulphur at 400°C for 15 minutes; (right) galvanostatic curves at 1C and C/10.
- Fig. 6: shows (left) specific charge at 2 different rates for the pure MoS₂ sample between [0.05V-3.5V] vs. Li+/Li and (right) the corresponding galvanostatic curves.
- Fig. 7: shows.(left) specific charge at 2 different rates for the composite MoO3/MoS2 core-shell particles obtained from example 5 between 1.5V-3.5V vs. Li+/Li; and (right) galvanostatic curves.
- Fig. 8: shows(left) Specific charge at 2 different rates for the pure MoO3 sample obtained from MoO3 nanobelt synthesis between [1.5V-3.5V] vs. Li+/Li; and (right) the corresponding galvanostatic curves

### EXAMPLES

### MoO₃ nanobelt synthesis

MoO₃ nanobelts were synthesized by a hydrothermal method, where 0.5 g of Mo⁰ metal powder (99.7%, Fluka Chemie AG) were slowly added into 10 ml H₂O₂ (35%); after an exothermic reaction the obtained yellowish solution was loaded into a PTFE-lined autoclave which was brought to a temperature of 180°C for 12 hours. The white solid molybdenum trioxide thus formed was then isolated by centrifugation and washed with deionized water several times. After drying under vacuum at 70°C, the dried white solid molybdenum trioxide was collected for further synthetic steps.

### Example 1: Electrode material synthesis

0.3 g of the previously obtained MoO₃ nanobelts and 1 g of pure sulphur powder (99.999%, Acros Organics) were placed in the tubular cavity of a gas furnance (Gero SR-70-500).The sulphur was placed upstream of the gas flow, whereas the MoO₃ was placed downstream of the gas flow. The cavity of the gas furnace was then brought to a temperature of 400°C, and an Ar gas flow (10 l/h) having a temperature of 400°C was directed from the sulphur towards the MoO₃ for the duration of 30 minutes. The furnace was then allowed to cool down and the thus obtained product removed from the furnace for further characterization.

### Example 2: Electrode material synthesis

0.3 g of the previously obtained MoO₃ nanobelts and 0.5 g of pure sulphur powder (99.999%, Acros Organics) were placed in the tubular cavity of a gas furnance (Gero SR-70-500): The sulphur was placed upstream of the gas flow, whereas the MoO₃ was placed downstream of the gas flow. The cavity of the gas furnace was then brought to a temperature of 400°C, and an Ar gas flow (10 l/h) having a temperature of 400°C was directed from the sulphur towards the MoO₃ for the duration of 10 minutes. The furnace was then allowed to cool down and the thus obtained product removed from the furnace for further characterization.

### Example 3: Electrode material synthesis

0.3 g of the previously obtained MoO₃ nanobelts and 0.3 g of pure sulphur powder (99.999%, Acros Organics) were placed in the tubular cavity of a gas furnance (GERO, SR 70-500/11): The sulphur was placed upstream of the gas flow, whereas the MoO₃ was placed downstream of the gas flow. The cavity of the gas furnace was then brought to a temperature of 400°C, and an Ar gas flow (10 l/h) having a temperature of 400°C was directed from the sulphur towards the MoO₃ for the duration of 10 minutes. The furnace was then allowed to cool down and the thus obtained product removed from the furnace for further characterization.

### Example 4: Electrode material synthesis

0.3 g of the previously obtained MoO₃ nanobelts and 0.2 g of pure sulphur powder (99.999%, Acros Organics) were placed in the tubular cavity of a gas furnance (GERO, SR 70-500/11): The sulphur was placed upstream of the gas flow, whereas the MoO₃ was placed downstream of the gas flow. The cavity of the gas furnace was then brought to a temperature of 400°C, and an Ar gas flow (10 l/h) having a temperature of 400°C was directed from the sulphur towards the MoO₃ for the duration of 10 minutes. The furnace was then allowed to cool down and the thus obtained product removed from the furnace for further characterization.

### Example 5: Electrode material synthesis

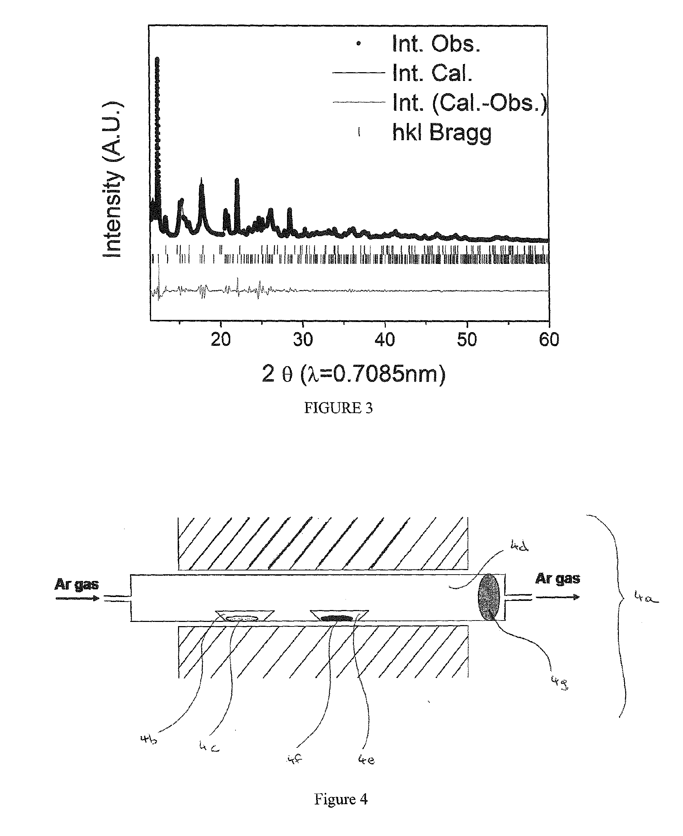

0.5 g of the previously obtained MoO₃ nanobelts and 0.333 g of pure sulphur powder (99.999%, Acros Organics) were placed in the tubular cavity of a gas furnance (GERO, SR 70-500/11): The sulphur was placed upstream of the gas flow, whereas the MoO₃ was placed downstream of the gas flow. The cavity of the gas furnace was then brought to a temperature of 400°C, and an Ar gas flow (10 l/h) having a temperature of 400°C was directed from the sulphur towards the MoO₃ for the duration of 15 minutes. The furnace was then allowed to cool down and the thus obtained product removed from the furnace for further characterization. Figure 3 shows the synchrotron XRD diffraction pattern of the obtained MoO₃/MoS₂ nanobelts. The X-Ray pattern reveals half sharp Bragg peaks, indicative of a semi crystalline sample, which could be indexed on 2 different phase. The first one ascribable to the MoS₂ (JCPDS no. 02-0132) is a hexagonal phase with the following Rietveld-refined lattice parameters: *a* = 3.187(1) Å, *c* = 12.165(2) Å, *P63*/*mmc* space group (corresponding to a 107.01(1) Å³ cell volume), and the second one is an orthorhombic phase for the MoO₃ (JCPDS no. 05-0508) cell with the following refined lattice parameters: *a* = 3.949(1) Å, *b* = 13.787(1) Å, *c* = 3.698(2) Å, *Pbnm* space group (corresponding to a 201.34 Å³ cell volume).

### Example 6: Assembly of test cells

Electrodes were prepared by casting a slurry mixture of 80 wt% electrode material MoO₃/MoS₂ obtained according to Example 5, 10 wt% carbon black (Super-P carbon, TIMCAL Ltd.), and 10 wt% PVDF binder (Kynar, Arkema), suspended in N-methyl-2-pyrrolidone (NMP), onto a copper foil. The cast slurry was then placed under vacuum at 80°C until dry. From the dried cast, circular electrodes having a diameter of 13 mm were punched out and re-heated overnight at 120°C under vacuum in order to eliminate remaining solvent and/or absorbed water. From the thus obtained circular electrodes, test cells were then assembled in an Ar gas atmosphere using a circular lithium electrode as counter electrode and reference, a glass fiber separator and an electrolyte made from 1M LiPF₆ (Ferro, USA) in ethylene carbonate (EC):dimethyl carbonate 1:1 w/w.

### Example 7: Assembly of comparative cells

Electrodes were prepared by casting a slurry mixture of 80 wt% pure electrode material MoS₂ commercially available from Aldrich Fine Chemicals, 10 wt% carbon black (Super-P carbon, TIMCAL Ltd.), and 10 wt% PVDF binder (Kynar, Arkema), suspended in N-methyl-2-pyrrolidone (NMP), onto a copper foil. The cast slurry was then placed under vacuum at 80°C until dried. From the dried cast, circular electrodes having a diameter of 13 mm were punched out and re-heated overnight at 120°C under vacuum in order to eliminate remaining solvent and/or absorbed water. From the thus obtained circular electrodes, test cells were then assembled in an Ar gas atmosphere using a circular lithium electrode as counter electrode and reference, a glass fiber separator and an electrolyte made from 1M LiPF₆ (Ferro, USA) in ethylene carbonate (EC):dimethyl carbonate 1:1 w/w.

### Example 8: Assembly of comparative cells

Electrodes were prepared by casting a slurry mixture of 80 wt% pure electrode material MoO₃ as obtained in the previously referenced MoO₃ nanobelt synthesis method, 10 wt% carbon black (Super-P carbon, TIMCAL Ltd.), and 10 wt% PVDF binder (Kynar, Arkema), suspended in N-methyl-2-pyrrolidone (NMP), onto a copper foil. The cast slurry was then placed under vacuum at 80°C until dried. From the dried cast, circular electrodes having a diameter of 13 mm were punched out and re-heated overnight at 120°C under vacuum in order to eliminate remaining solvent and/or absorbed water. From the thus obtained circular electrodes, test cells were then assembled in an Ar gas atmosphere using a circular lithium electrode as counter electrode and reference, a glass fiber separator and an electrolyte made from 1M LiPF₆ (Ferro, USA) in ethylene carbonate (EC):dimethyl carbonate 1:1 w/w.

### Example 9: Electrochemical analysis (Comparison between MoS₂/MoO₃ and pure MoS₂)

MoO₃ /MoS₂: Test cells obtained according to Example 6 were used in the measurements.

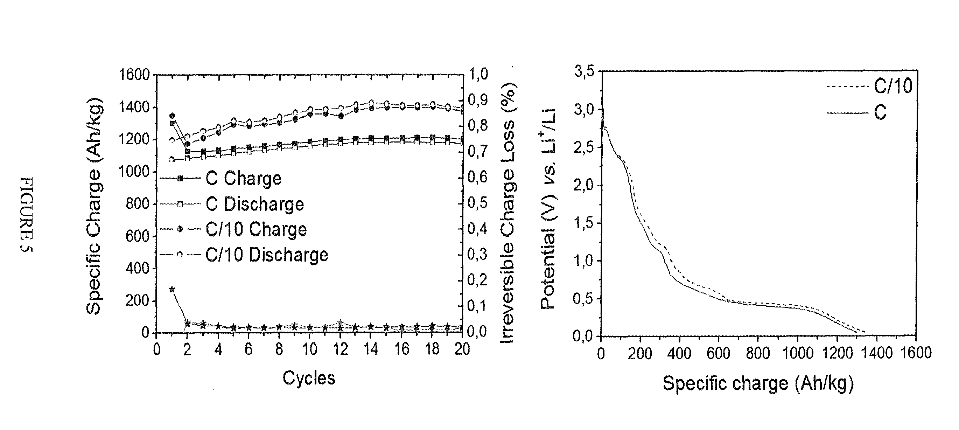

As can be seen from the data of Figure 5, when cycled between 0.05-3.5 V vs. Li+/Li, the specific charge per mass unit for the lithium intercalating electrode material obtained according to Example 5 is stable around 1100 Ah/kg at 1C rate, and stably reaches up to 1400 Ah/kg after less than 10 cycles at C/10 rate. Most importantly, the irreversible charge loss is less than 1%, indicating a coulomb efficiency of more than 99%.

MoS₂: Test cells obtained according to Example 7 were used in the measurements.

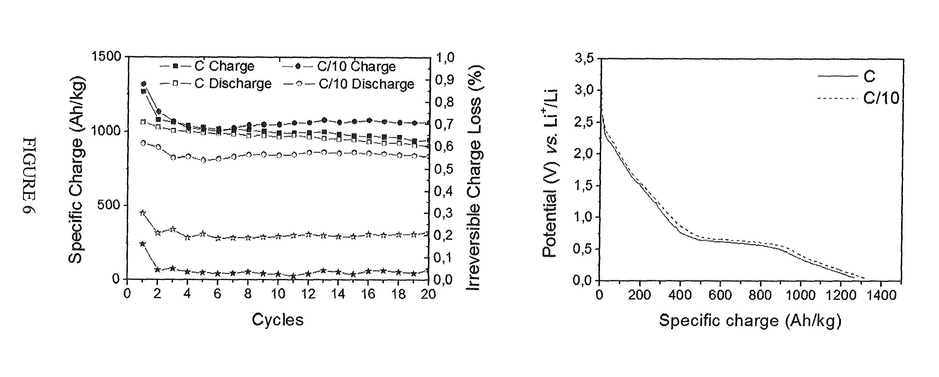

As can be seen from the data of Figure 6, when cycled between 1.5-3.5 V vs. Li+/Li, the specific charge per mass unit for the lithium intercalating electrode material from pure MoS₂ commercially available from Aldrich Fine Chemicals , is stable around 1300 Ah/kg at 1C rate, and discharge capacity is stable around 1300 Ah/kg, charge capacity is only 800 Ah/kg at C/10 rate. The irreversible charge loss at C/10 is around 20 %, which is much worse than the MoS₂ coated MoO₃ obtained from Example 7.

### Example 10: Electrochemical analysis (Comparison between MoS₂/MoO₃ and pure MoO₃)

MoS₂ /MoO₃: Test cells obtained according to Example 6 were used in the measurements..

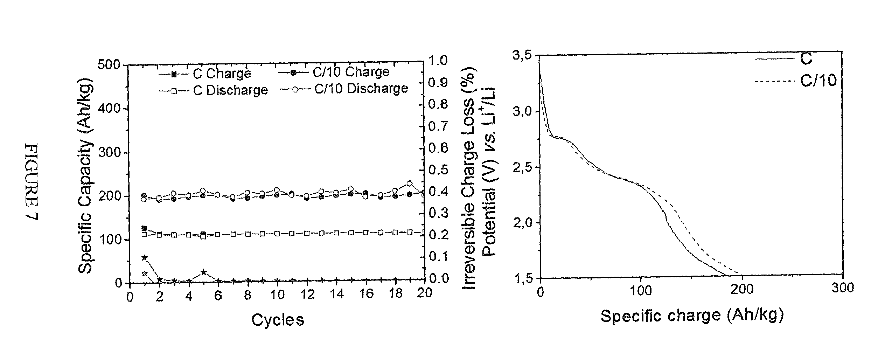

As can be seen from the data of Figure 7, when cycled between 1.5-3.5 V vs. Li+/Li, the specific charge per mass unit for the lithium intercalating electrode material obtained according to Example 5 is stable around 180 Ah/kg at 1C rate, and stably reaches up to 200 Ah/kg at C/10 rate. Most importantly, the irreversible charge loss is less than 1%, indicating a coulomb efficiency of more than 99%.

MoO₃: Test cells obtained according to Example 8 were used in the measurements.

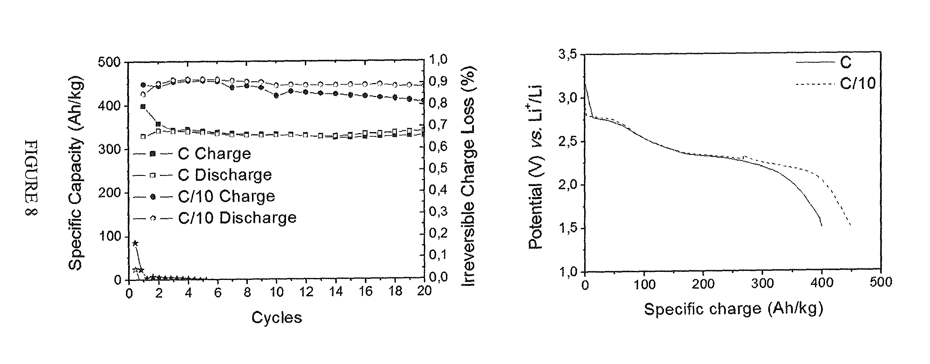

As can be seen from the data of Figure 8, when cycled between 1.5-3.5 V vs. Li+/Li, the specific charge per mass unit for the lithium intercalating electrode material from pure MoO₃ nanobelts according to Example 8, is stable around 350 Ah/kg at 1C rate. The initial specific capacity reached 450 Ah/kg at C/10 rate, but after 8 cycles the irreversible charge loss at C/10 is getting larger and larger, which is much worse than the MoS₂ coated MoO₃ sample obtained from Example 7.

### LIST OF REFERENCE SIGNS

- 4a: tube furnace
- 4b: recipient
- 4c: sulphur
- 4d: furnace tube
- 4e: recipient
- 4f: transition metal
- 4g: sulphur filter

## Claims

1. A lithium-intercalating electrode material in the form of a core-shell particle, wherein
a. the core of the core-shell particle comprises, preferably consists of, an oxide of a transition metal and
b. the shell of said core-shell particle comprises, preferably consists of, a sulphide of the transition metal of the oxide of the transition metal.

2. The lithium-intercalating electrode material according to claim 1, wherein the oxide of a transition metal is chosen among oxides of Sc, Y, Ti, Zr, Hf, V, Nb, Ta, Cr, Mo, W, Mn, Tc, Re, Fe, Ru, Os, Cu, Co, Rh, Ir, Ni, Pb, Pt, Au,Ag, Zn, lanthanoids and actinoids, preferably molybdenum, chromium, manganese, silver, iron and nickel.

3. The lithium-intercalating electrode material according to claim 1, wherein the transition metal is molybdenum.

4. The lithium-intercalating electrode material according to claim 1, wherein the transition metal is molybdenum, and the oxide of the transition metal is molybdenum trioxide and the sulphide of the transition metal is molybdenum disulphide.

5. The lithium-intercalating electrode material according to any one of the preceding claims, wherein the core-shell particle has an elongated shape.

6. The lithium-intercalating electrode material according to any one of the preceding claims, wherein the shell of the core-shell particle has a thickness of from 1 nm to 10 nm.

7. The lithium-intercalating electrode material according to any one of the preceding claims, wherein the molar ratio between the sulphide of the transition metal (TMS) of the shell and the oxide of the transition metal (TMO) of the core is of from 1:99 to 50:50, preferably of from 5:95 and 25:75, more preferably of from 10:95 to 15:85.

8. Use of the lithium-intercalating electrode material according to any one claims of 1 to 7 in a secondary lithium-ion cell.

9. A secondary lithium-ion cell, comprising an electrode, a counter-electrode and an electrolyte, wherein the electrode comprises the lithium-intercalating electrode material according to any one of claims 1 to 7.

10. The secondary lithium-ion cell according to claim 9, wherein the electrode further comprises an electrically conductive filler and a binder.

11. A method of producing a lithium-intercalating electrode material in the form of a core-shell particle, comprising the steps of:
a. bringing a predetermined quantity of particles comprising, or consisting of, an oxide of a transition metal to a temperature of from 200 to 500 °C,
b. contacting said particles with a predetermined quantity of sulphur in the gaseous state at a temperature of from 200 to 500 °C for a predetermined time such as to form a shell of a sulphide of the transition metal on said particles.

12. The method of claim 11 wherein the steps a. and b. are carried out in an oxygen-free gas atmosphere or in an inert gas atmosphere, preferably in an inert gas atmosphere, more preferably in an Ar or Xe atmosphere optionally containing between 0.01 and 5 volume percent hydrogen.

13. The method of claim 11 or 12 wherein the method is carried out in a furnace, preferably a gas flow furnace.

14. The method according to claims 11 to 13, wherein the oxide of a transition metal is molybdenum trioxide and the sulphide of a transition metal is molybdenum disulphide.

15. The method of claim 14 wherein the weight ratio between the molybdenum trioxide and sulphur is of from 1:10 to 10:1 and preferably from 3:10 to 3:2.
